# EUROPEAN PATENT SPECIFICATION

(11) **EP 0 676 522 B1**
(45) Date of publication and mention of the grant of the patent: **05.01.2000**
(21) Application number: 95106805.5
(22) Date of filing: 24.09.1991
(51) Int. Cl.: E05C 19/02, G11B 33/04

(54) **Lock mechanism and latch device**
Verschlussmechanismus und Sperrvorrichtung
Mécanisme de fermeture et dispositif de verrouillage

(30) Priority: 27.09.1990 JP 25830690; 13.11.1990 JP 30687890; 13.11.1990 JP 30687990; 30.11.1990 JP 34066990
(43) Date of publication of application: 11.10.1995
(62) Divisional of application: 91116242.8
(73) Proprietor: NIFCO INC., Yokohama-shi Kanagawa-ken (JP)
(72) Inventor: Kurosaki, Matsuo, Yahata-shi, Kyoto-fu 614 (JP)
(74) Representative: Goddar, Heinz J., Dr.

(56) References cited:
- FR-A- 2 622 244
- US-A- 4 792 165

## Description

### BACKGROUND OF THE INVENTION

### Field of the Invention:

The present invention relates to a latch device in which, by pressing an openable cover of an audio apparatus, an audio-apparatus accommodating case or the like, or an openable member of such as a door of a box or the like, the openable cover or member is engaged with or disengaged from a main body.

### Description of the Related Art:

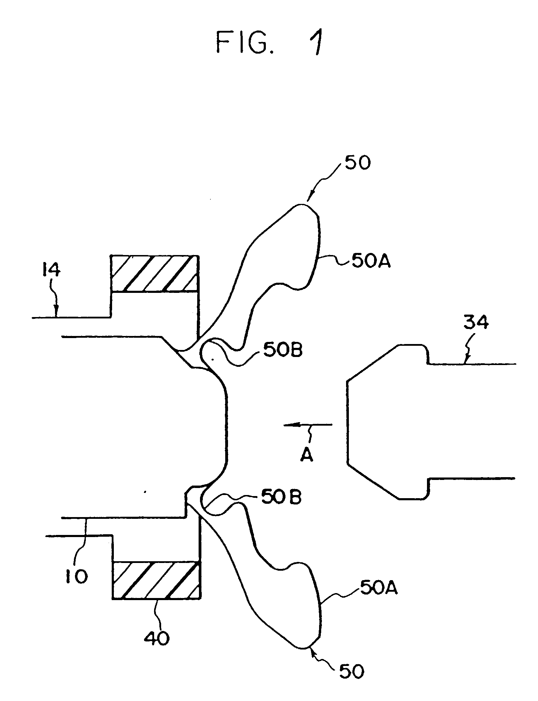

In a typical audio apparatus or the like, a latch device is provided on an openable cover so as to retain the openable cover, as shown in Fig. 1.

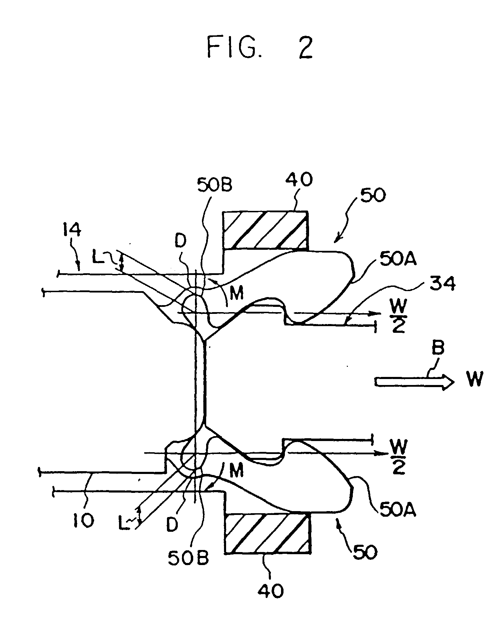

As shown in the drawing, the latch device is arranged such that each time a latch body 10 is pressed by a striker 34 in the direction of arrow A, a tracing member provided in a housing 14 moves halfway in a heart-shaped circulatory cam groove formed in the latch body 10, thereby allowing the latch body 10 to be retained in the housing 14 alternatively in a state in which the latch body 10 is pushed in and in a state in which it is withdrawn. Concurrently, as shown in Fig. 2, while a pair of arms 50 formed on the latch body 10 are respectively being pressed by a pair of rectangular frames 40 of the housing 14, the striker 34 fixed to the openable cover is clamped or released, thereby setting the openable cover in a closed state or in an openable state.

As shown in Figs. 1 and 2, each of the arms 50, which are generally provided on the latch body 10, comprises a holder portion 50A for clamping the striker 34 and a hinge portion 50B serving as a center of rotation of the holder portion 50A. The arms 50 are formed of a flexible material such as nylon so as to facilitate the bending of the hinge portions 50B and reduce their frictional resistance with respect to the rectangular frames 40.

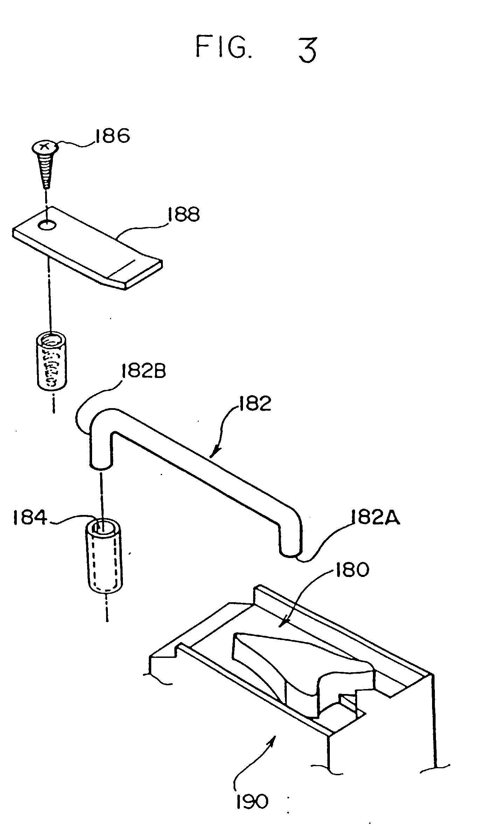

In a typical latch device such as the one shown in Fig. 3, a rear end portion 182B of a tracing member 182 moving in a circulatory cam groove 180 in a circulatory manner is rotatably inserted in a fitting hole 184 formed in the unillustrated housing. In addition, the tracing member 182 is pressed by a pressing leaf spring 188 secured to the housing by means of a screw 186 such that the tracing member 182 will not come off the fixing hole 184.

However, with the above-described structure for fitting the tracing member 182, the tracing member 182 cannot be fit in the housing from the outside thereof. For this reason, it has been necessary to fixedly hold the tracing member in the housing in advance, and then to allow a tip portion 182A of the tracing member 182 to be fitted into the circulatory cam groove 180 formed in a latch body 190 which is inserted into the rear portion of the housing.

For this reason, in the event that the tip portion 182A of the tracing member 182 is shaken during the assembling operation, the tip portion 182A cannot be inserted into the circulatory cam groove 180, and the tip portion 182A of the tracing member 182 is brought into contact with a different portion of the latch body 190. Hence, a drawback has been encountered in that the latch body 190 cannot be inserted into the housing, so that the assembling of the latch device has been troublesome. In addition, a pressing member (e.g., a pressing leaf spring 188) is required for pressing the tracing member 182, with the result that the number of component parts used disadvantageously increases and the assembling efficiency has been low.

In document FR-A-2 622 244 a latch device comprising a housing and a latch body is disclosed. A solid, mainly rectangular tracing member is rotatably fixed within the housing by means of a pin, provided on an upper side of said tracing member, and a through hole, provided on an upper side of said housing, wherein said pin is in engagement with said through hole. The tracing member further comprises a second pin on a lower side of said tracing member for following a predetermined path in said latch body during operation.

### SUMMARY OF THE INVENTION

It is an object of the present invention to provide a latch device featuring a tracing-member fitting structure which allows the number of component parts used to be reduced, which facilitates the assembly of the tracing member, and which provides the tracing member with a large supporting strength.

In accordance with the present invention, a tracing-member fitting structure of a latch device for causing an openable member to engage with or disengage from a main body is comprised of:
a housing fitted on said main body;
a latch body accommodated in said housing;
at least one circulatory cam groove formed on said latch body;
a tracing member for tracing said cam groove and having two stable positions, said tracing member and said latch body being in a state of engagement in one stable position and being completely disengaged in the other stable position by circulating in said at least one circulatory cam groove each time an operation of pushing in said latch body is effected;
wherein said tracing member substantially forms a U-shaped pin with at least one leg, being longer or having the same length as the other leg, forming a distal end portion of said tracing member, said at least one end portion being perpendicular to said leg and in the same plane;
a rear wall of the housing having a substantially rectangular through hole, in which a T-shaped support piece projects from a side of the through opening into said opening, such that space is defined between the head portion of the T-shaped support piece and the sides of the through hole, whereby said space serves as a fitting hole, into which the distal end portion is inserted, said head portion of the T-shaped support is provided with a slanting surface formed as a guide plate, directed into the housing towards an arcuate fitting groove on the head portion, whereby the guide plate guides the bottom joining piece of the U-shaped tracing member as it reaches the rear wall, when during insertion of the tracing member into the housing the distal end portions have been inserted past the rear wall, through the fitting hole, such that the bottom joining piece upon contact with the T-shaped support piece is guided along the slanting surface into the arcuate fitting groove; said arcuate fitting groove being adapted to retain said bottom joining piece such that the bottom joining piece serves as a rotation axis for the tracing member when the at least one distal end portion moves along the circulatory cam groove.

In the above-described tracing-member fitting structure of the latch device in accordance with the invention, the tracing member is fitted as follows.

The tip portion of the tracing member is fitted into the housing through a fitting hole formed in the housing of the latch device. Then, with the tip portion of the tracing member inserted in the housing, the rear end portion of the tracing member is moved to a guide hole communicating with the fitting hole. The rear end portion of the tracing member which has moved to the guide hole is guided to a slanted guide surface communicating with the guide hole, and is pushed in until it reaches a fitting groove. At this juncture, since a portion of communication between the fitting groove and the slanted guide surface is formed to be slightly smaller than the outside diameter of the tracing member, the tracing member is fitted in the fitting groove in such a manner as to expand this portion of communication between the fitting groove and the slanted guide surface. Accordingly, once the tracing member is fitted in the fitting groove, the tracing member is prevented from coming off easily.

Furthermore, since the fitting groove and the slanted guide surface serve to integrally support the tracing member with respect to a tensile force acting thereon, this arrangement exhibits large supporting strength.

With the tracing-member fitting structure of the latch device in accordance with the invention, no fixing member is required separately for fixing the tracing member in the housing, so that the number of component parts used can be reduced, and fitting performance improves. In addition, since the tracing member can be fitted from outside the housing after the latch body has been inserted into the housing, the assembling of the tracing member is facilitated.

Furthermore, since the opposite sides of the tracing member are supported by the fitting groove formed integrally with ribs provided in the housing, it is possible to provide a latch device having large strength for supporting the tracing member.

### BRIEF DESCRIPTION OF THE DRAWINGS

Fig. 1 is a plan view illustrating a state before conventional arms clamp the striker;
Fig. 2 is a plan view illustrating a state after the conventional arms have clamped the striker;
Fig. 3 is an exploded perspective view illustrating a component-parts fitting structure of a conventional latch device ;
Fig. 4 is a rear view of the latch device illustrating a tracing-member fitting structure of the latch device in accordance with a first embodiment of the invention;
Fig. 5 is a perspective view illustrating the tracing-member fitting structure of the latch device in accordance with the first embodiment of the invention;
Fig. 6 is an exploded perspective view of the latch device in accordance with the first embodiment of the invention;
Fig. 7 is a cross-sectional view of the latch device in accordance with the first embodiment of the invention;
Figs. 8 to 10 are partial cross-sectional views illustrating the procedure of fitting a tracing member in a tracing-member fitting mechanism of the latch device in accordance with the first embodiment of the invention;
Fig. 11 is a perspective view illustrating the tracing-member fitting structure of the latch device in accordance with a second embodiment of the invention; and
Fig. 12 is an exploded perspective view of a latch device in accordance with the present invention.

### DETAILED DESCRIPTION OF THE PREFERRED EMBODIMENTS

### (Overall Configuration of Latch Mechanism)

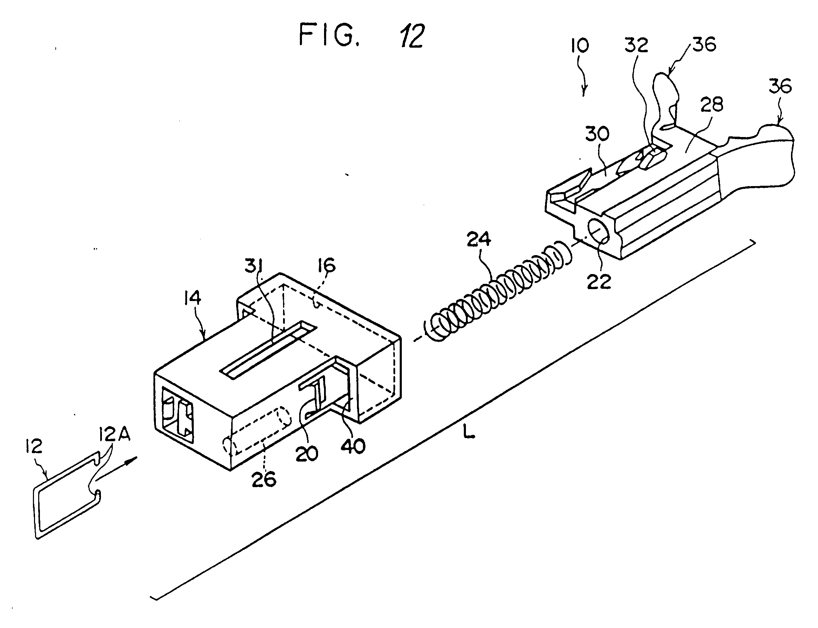

As shown in Fig. 12, a latch device L comprises a latch body 10 and a housing 14 for accommodating a tracing member 12 therein.

The housing 14 has a box-shaped configuration of a predetermined thickness, and the latch body 10 is inserted into an opening 16 formed at a longitudinal end of the housing 14. A rectangular frame 40 for fixing the housing 14 to an audio apparatus or the like is formed in such a manner as to define the opening 16. A pair of projections 20 are formed on opposite side surfaces of the housing 14, respectively, in correspondence with the laterally projecting portions of the rectangular frame 40. This arrangement is provided to allow an unillustrated fixing plate to be clamped by the laterally projecting portion of the rectangular frame 40 and the projection 20 on each side of the housing 14, so as to fix the housing 14 to the fixing plate.

The latch body 10 which is inserted into the housing 14 is substantially rectangular parallelepipedal in configuration, and a circular hole 22 is formed along the longitudinal direction of the latch body 10, extending from an insertion end thereof. A compression coil spring 24 is accommodated in the circular hole 22. A portion of the compression coil spring 24 projects from the circular hole 22 and is fitted in a spring-bearing hole 26. As a result, the latch body 10 is constantly urged by the compression coil spring 24 in the direction in which the latch body 10 is pulled out of the housing 14.

A recessed portion 28 is formed on each of the top and bottom surfaces of the latch body 10. A circulatory cam groove 30 is formed in each of the recessed portions 28. Each tip portion 12A of the tracing member 12 is inserted into the respective circulatory cam groove 30 and is adapted to move in the circulatory cam groove 30 in a circulating manner while being brought into contact with the wall surface of the circulatory cam groove 30, so as to retain the latch body 10 in its pushed-in state.

A projection 32 is formed on the top surface of the latch body 10, and is fitted in an elongated guide hole 31 formed in the housing 14. As a result, as the projection 32 moves in the elongated guide hole 31, the latch body 10 is reciprocatively moved relative to the housing 14. Also, as the projection 32 is brought into contact with one end of the elongated guide hole 31, further movement of the latch body 10 in the direction in which it is pulled out is prevented against the urging force of the compression coil spring 24.

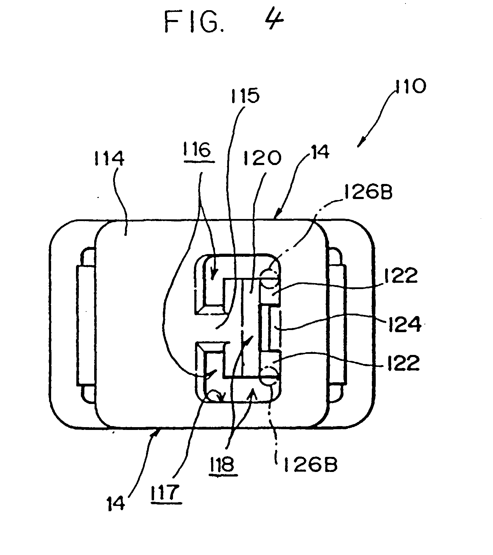

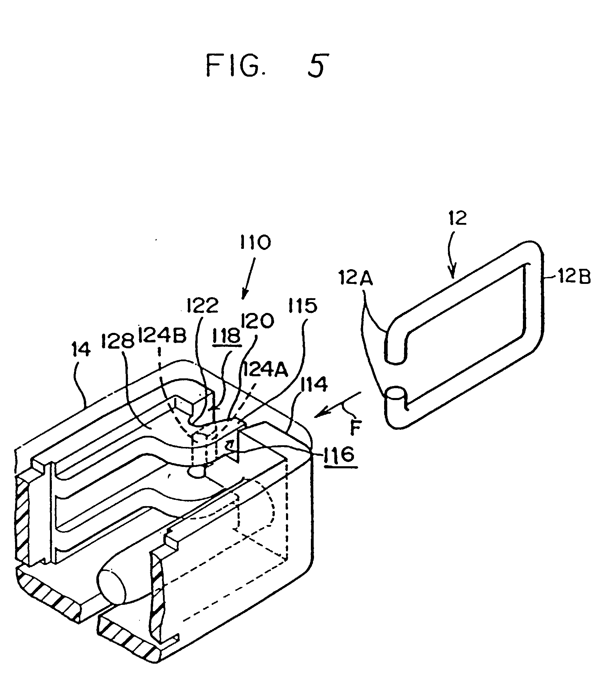

Figs. 4 and 5 illustrative a tracing-member fitting structure 110 of the latch device in accordance with the first embodiment of the invention.

A housing 14 has a box-shaped configuration of a predetermined thickness, and a rectangular through hole 117 is formed in a rear wall 114 of the housing 14 (see fig.4). As shown in Fig. 4, in this through hole 117, a substantially T-shaped support piece 115 projects from the left-hand side of the drawing toward the center of the through hole 117, while a tongue piece 124 projects from the right-hand side of the drawing toward the center of the through hole 117.

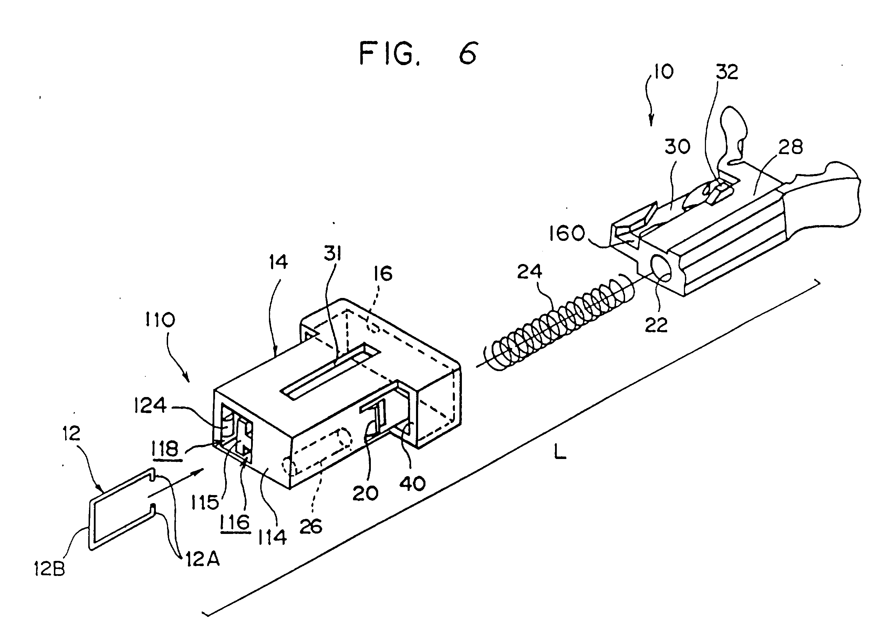

As viewed in the drawing, an upper and a lower space which are each defined between the head portion of the T-shaped support piece 115 projecting inwardly in the through hole 117 and the left-hand side of the through hole 117 serve as fitting holes 116 into which tip portions 12A (see Fig. 6) of the tracing member 12 are inserted. Meanwhile, as viewed in the drawing, an upper and a lower space which are respectively defined between an upper tip of the head portion of the T-shaped support piece 115 and an upper side of the through hole 117 and between a lower tip of the head portion of the support piece 115 and a lower side of the through hole 117 communicate with an upper end of the upper fitting hole 116 and a lower end of the lower fitting hole 116, respectively. Together with the fitting holes 116, these upper and lower spaces respectively form substantially L-shaped through-hole portions for guiding a rear end portion or bottom joining piece 12B (see Fig. 6) of the tracing member 12, and are formed as guide holes 118 for guiding the rear end portion 12B (see Fig. 6) of the tracing member 12.

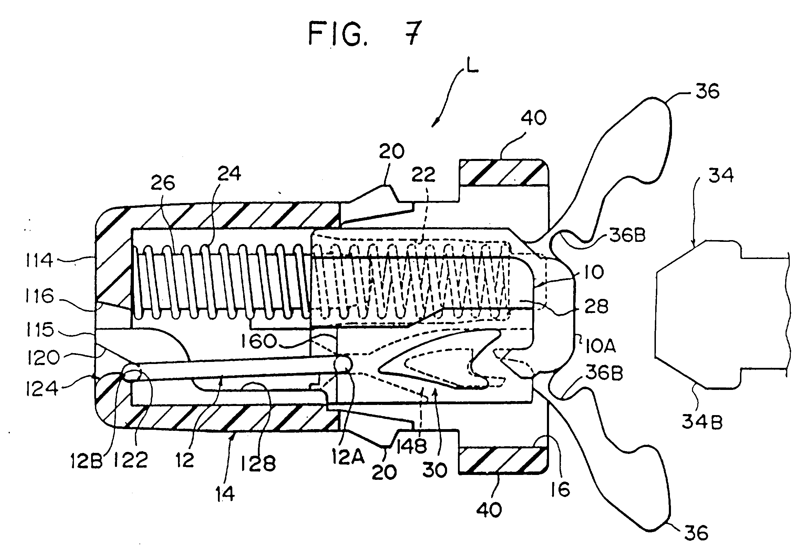

A portion of the head portion of the T-shaped support piece 115 facing the right-hand side of the through hole 117 is provided with a slanted surface such that the distance between the same and the right-hand side of the through hole 117 becomes smaller in the direction in which the tracing member 12 is inserted. This slanted portion is formed as a guide plate 120 for guiding the rear end portion or bottom joining piece 12B of the tracing member 12 into the housing 14 (see Fig.7). A pair of arcuate fitting grooves 122 for holding the rear end portion 12B of the tracing member 12 are formed at an innermost end portion of the guide plate 120, i.e., at the portion where the distance between the guide plate 120 and the right-hand side of the through hole 117 is the smallest. In addition, the inner half peripheries of the pair of fitting grooves 122 are respectively formed in a pair of parallel ribs 128 provided on the housing 14. The tensile force of the tracing member 12 acting in the direction of arrow F is supported by these ribs 128 (see Fig. 5).

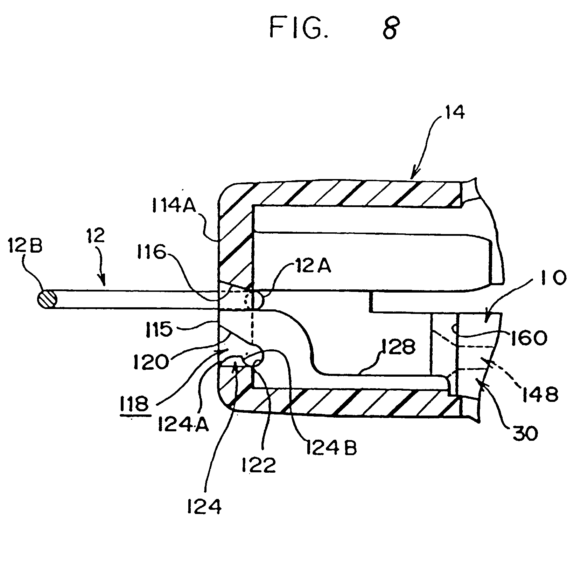

As shown in Fig. 5, a curved portion 124A whose rear end in the through hole 117 projects toward the guide plate 120, as shown in Fig. 8, is formed on the tongue piece 124 disposed between the pair of ribs 128 and projecting in the direction of narrowing the inlet portion of the fitting grooves 122. An end portion of the curved portion 124A of the tongue piece 124 forms a quarter arc portion 124B of each of the fitting grooves 122. By virtue of this quarter arc portion 124B, together with the half arc portions formed in the fitting grooves 122, the coming off of the rear end portion 12B of the tracing member 12 is prevented (see Fig.7).

Next, a description will be given of the latch device provided with the above-described structure for fitting the tracing member. As shown in Fig. 6, the structures of the latch body 10, the external configuration of the housing 14, and the compression coil spring 24 are the same as those described with respect to the above-described embodiment of the first aspect. Therefore, these component parts and their portions will be denoted by the same reference numerals, and a description thereof will be omitted here.

The recessed portion 28 is formed on each of the top and bottom surfaces of the latch body 10. Circulatory cam grooves 30, 148 (see Fig. 7) are respectively formed in the recessed portions 28. The tip portions 12A of the tracing member 12 are respectively inserted into the circulatory cam grooves 30, 148 and are adapted to move in the circulatory cam grooves 30, 148 in a circulating manner while being brought into contact with the respective wall surfaces of the circulatory cam grooves.

The tracing member 12 has a substantially C-shaped configuration formed by cutting off a portion of a ring. The gap between the tip portions 12A is set to be greater than the distance between the bottom surfaces of the circulatory cam grooves 30, 148.

The projection 32 is formed on the top surface of the latch body 10, and is fitted in the elongated guide hole 31 formed in the housing 14. As a result, as the projection 32 moves in the elongated guide hole 31, the latch body 10 is reciprocatively moved relative to the housing 14. Also, as the projection 32 is brought into contact with one end of the elongated guide hole 31, further movement of the latch body 10 in the direction in which it is pulled out is prevented against the urging force of the compression coil spring 24.

As shown in Fig. 7, the pair of arms 36 are provided on the latch body 10 on the side away from the side of insertion into the housing 14, and their distal ends are spaced apart from each other. An enlarged-diameter end portion 34B of the striker 34 secured to the unillustrated openable cover is inserted between the arms 36 to press a central portion 10A of the arms 36, so as to push the latch body 10 into the housing 14. When the latch body 10 is thus pushed in by the striker 34, the outer sides of the arms 36 are brought into contact with the rectangular frame 40, so that the arms 36 rotate in the mutually approaching direction with the hinges 36B serving as fulcrums. As a result, the enlarged-diameter end portion 34B of the striker 34 is held by the arms 36, thereby closing the openable cover.

A description will now be given of the procedure of assembling the latch device having the structure for fitting the tracing member in accordance with the first embodiment of the invention.

First, the compression coil spring 24 is inserted into the circular hole 22 formed in the latch body 10 or into the spring-bearing hole 26 provided in the housing 14 (see Fig. 6).

The latch body 10 is then pushed into the housing 14 with the compression coil spring 24 being urged, and the projection 32 is inserted into the elongated guide hole 31 formed in the housing 14, thereby accommodating the latch body 10 in the housing 14 (see Figs. 6,7).

As shown in Fig. 8, the tip portions 12A of the tracing member 12 are then inserted into the housing 14 through the fitting holes 116.

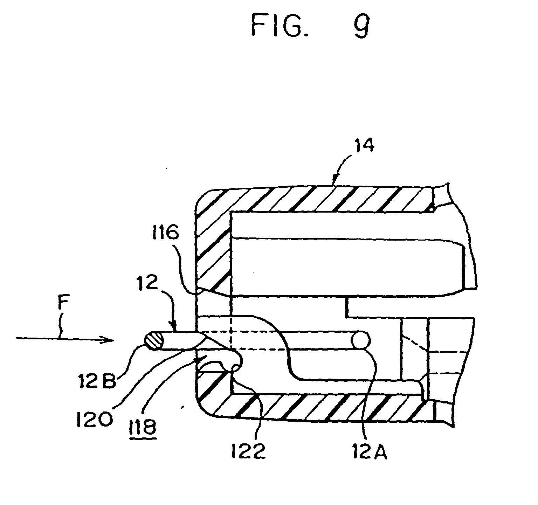

Subsequently, with the tip portions 12A of the tracing member 12 inserted in the housing 14, the rear end portion 12B of the tracing member 12 is moved toward the guide holes 118 (see Fig. 9).

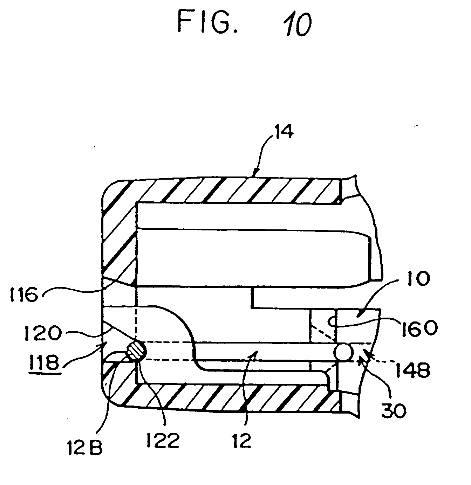

After the rear end portion 12B of the tracing member 12 has been moved to the guide holes 118, while the tip portions 12A of the tracing member 12 are being inserted into tapered guide portions 160 of the circulatory cam grooves 30, 148 while being guided by the guide plate 120, the rear end portion 12B is pushed into the fitting grooves 122, thereby completing the assembling operation (see Fig. 10).

It should be noted that the pushing in of the rear end portion 12B of the tracing member 12 can be facilitated if an appropriate pushing-in tool such as a screwdriver is used.

A description will now be given of a second embodiment of the invention.

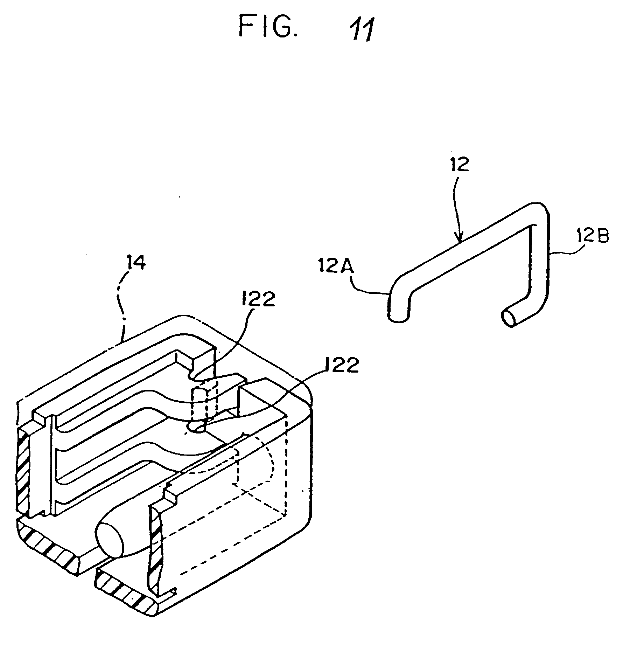

As shown in Fig. 11, the present invention is applicable to a structure in which a circulatory cam groove having a stepped portion is formed on only one surface of the latch body, as in the case of a conventional latch device.

That is, if the arrangement provided is such that the rear end portion 12B of the tracing member 12 is fitted by being received in the pair of fitting grooves 122, a fixing member for fitting the tracing member 12 is not required separately.

The features disclosed in the foregoing description, in the claims and in the accompanying drawings may, both separately and in any combination thereof, be material for realising the invention in diverse forms thereof.

## Claims

1. A latch device for causing an openable member to engage with or disengage from a main body by pushing said member in a predetermined direction, comprising:
a housing (14) fitted on said main body;
a latch body (10) accommodated in said housing (14);
at least one circulatory cam groove (30, 148) formed on said latch body (10);
a tracing member (12) for tracing said cam groove (30, 148) and having two stable positions, said tracing member (12) and said latch body being in a state of engagement in one stable position and being completely disengaged in the other stable position by circulating in said at least one circulatory cam groove each time an operation of pushing in said latch body is effected;
wherein said tracing member (12) substantially forms a U-shaped pin with at least one leg, being longer or having the same length as the other leg, forming a distal end portion (12A) of said tracing member (12), said at least one end portion (12A) being perpendicular to said leg and in the same plane;
a rear wall (114) of the housing (14) having a substantially rectangular through hole (117), in which a T-shaped support piece (115) projects from a side of the through opening into said opening, such that space is defined between the head portion of the T-shaped support piece and the sides of the through hole, whereby said space serves as a fitting hole (116), into which the distal end portion (12A) is inserted, said head portion of the T-shaped support is provided with a slanting surface formed as a guide plate (129), directed into the housing towards an arcuate fitting groove (122) on the head portion, whereby the guide plate (120) guides the bottom joining piece (12B) of the U-shaped tracing member as it reaches the rear wall (114), when during insertion of the tracing member into the housing the distal end portions have been inserted past the rear wall (114), through the fitting hole (116), such that the bottom joining piece (12B) upon contact with the T-shaped support piece (115) is guided along the slanting surface into the arcuate fitting groove (122); said arcuate fitting groove being adapted to retain said bottom joining piece (12B) such that the bottom joining piece (12B) serves as a rotation axis for the tracing member when the at least one distal end portion (12A) moves along the circulatory cam groove.

2. A latch device according to claim 1, further comprising a support member (128) disposed in said housing (14) having a portion of said argued fitting groove (122) and the slanting surface formed therein to support a tensile force of said tracing member (12).

3. A latch device according to claim 1 or 2, further comprising a preventing member or tongue piece (124) disposed in said housing (14) and adapted to prevent said bottom joining piece (12B) of said tracing member (12) from coming off said fitting groove (122).

4. A latch device according to one of the preceding claims, wherein said tracing member has at least one distal end portion (12A) for tracing said at least one circulatory cam groove (30, 148).

5. A latch device according to one of the preceding claims, wherein said tracing member (12) is constituted by a substantially U-shaped rodlike member having two distal end portions (224, 226) for tracing two of said at least one circulatory cam grooves (30, 148).

## Patentansprüche

1. Verschlußvorrichtung, mit der ein öffenbares Element in Eingriff mit einem Hauptkörper gebracht werden kann oder von diesem freigesetzt werden kann, indem das Element in eine vorbestimmte Richtung geschoben wird, mit:
einem Gehäuse (14), das passend auf den Hauptkörper aufgesetzt ist;
einem Verschlußkörper (10), der in dem Gehäuse (14) untergebracht ist;
wenigstens einer umlaufenden Kurvenscheibennut (30, 148), die auf dem Verschlußkörper (10) gebildet ist;
einem Spurfolgeelement (12) zum Folgen der Kurvenscheibennut (30, 148), die zwei stabile Positionen hat, wobei das Spurfolgeelement (12) und der Verschlußkörper (10) in einem Eingriffszustand in einer stabilen Position sind und in der anderen stabilen Position vollständig außer Eingriff sind, indem sie in der wenigstens einen umlaufenden Kurvenscheibennut jedesmal umlaufen, wenn eine Schiebebetätigung in dem Verschlußkörper bewirkt wird;
wobei das Spurfolgeelement (12) im wesentlichen einen U-förmigen Stift mit wenigstens einem Bein bildet, das länger ist oder dieselbe Länge hat wie das andere Bein, das einen distalen Endabschnitt (12A) des Spurfolgeelementes (12) bildet, wobei der wenigstens eine Endabschnitt (12A) senkrecht zu dem Bein ist und in derselben Ebene liegt;
wobei eine Rückwand (114) des Gehäuses (14) ein im wesentlichen rechteckiges Durchgangsloch (117) hat, in das ein T-förmiges Trägerstück (115) von einer Seite der Durchgangsöffnung in die Öffnung ragt, so daß Raum zwischen dem Kopfabschnitt des T-förmigen Trägerstückes und den Seiten des Durchgangsloch definiert ist, wobei der Raum als ein Paßloch (116) dient, in das der distale Endabschnitt (12A) eingesetzt ist, wobei der Kopfabschnitt des T-förmigen Trägers mit einer schrägen Fläche versehen ist, die als eine Führungsplatte (129) ausgebildet ist, die in das Gehäuse (14) auf eine gebogene Paßnut (122) auf dem Kopfabschnitt gerichtet ist, wobei die Führungsplatte (120) das untere Verbindungsstück (12B) des U-förmigen Spurfolgeelementes führt, wenn es die Rückwand (114) erreicht, wenn während des Einsetzens des Spurfolgeelements in das Gehäuse (14) die distalen Endabschnitte hinter der Rückwand (14) durch das Paßloch (116) eingesetzt worden sind, derart, daß das untere Verbindungsstück (12B) beim Kontakt mit dem T-förmigen Trägerstück (115) entlang der schräg verlaufenden Fläche in die gebogene Paßnut (122) geführt wird; wobei die gebogene Paßnut so ausgelegt ist, daß sie das untere Verbindungsstück (12B) hält, so daß das untere Verbindungsstück (12B) als eine Drehachse für das Spurfolgeelement dient, wenn der wenigstens eine distale Endabschnitt (12A) sich entlang der umlaufenden Kurvenscheibennut bewegt.

2. Verschlußvorrichtung nach Anspruch 1, die weiterhin ein Halteelement (128) aufweist, das in dem Gehäuse (14) angeordnet ist, mit einem Teil der gebogenen Paßnut (122) und der schrägverlaufenden Fläche, die darin ausgebildet sind, um eine Zugkraft des Spurfolgeelementes (12) zu unterstützen.

3. Verschlußvorrichtung nach Anspruch 1 oder 2, die weiterhin ein Verhinderungselement oder Zungenstück (124) aufweist, das in dem Gehäuse (14) angeordnet ist, und so ausgelegt ist, daß verhindert wird, daß das untere Verbindungsstück (12B) des Spurfolgeelementes (12) aus der Paßnut (122) hinauskommt.

4. Verschlußvorrichtung nach einem der vorangehenden Ansprüche, bei der das Spurfolgeelement wenigstens einen distalen Endabschnitt (12A) zum Folgen der wenigstens einen umlaufenden Kurvenscheibennut (30, 148) aufweist.

5. Verschlußvorrichtung nach einem der vorangehenden Ansprüche, bei der das Spurfolgeelement (12) durch ein im wesentlichen U-förmiges stangenartiges Element mit zwei distalen Endabschnitten (224, 226) gebildet ist, um zwei der wenigstens einen umlaufenden Kurvenscheibennuten (30, 148) zu folgen.

## Revendications

1. Dispositif de verrouillage destiné à provoquer la mise en coopération d'un organe qui peut être ouvert avec un corps principal ou sa séparation de ce corps par poussée de l'organe dans un sens prédéterminée, comprenant :
un boîtier (14) monté sur le corps principal,
un corps de verrou (10) logé dans le boîtier (14),
au moins une gorge de came (30, 148) de circulation formée sur le corps de verrou (10),
un organe (12) de traçage destiné à parcourir la gorge de came (30, 148) et ayant deux positions stables, l'organe de traçage (12) et le corps de verrou étant à un état de coopération dans une première position stable et étant totalement séparés dans l'autre position stable, par circulation dans ladite au moins une gorge de came à circulation chaque fois qu'une opération de poussée du corps de verrou est réalisée,
l'organe de traçage (12) formant pratiquement une broche en U ayant au moins une branche plus longue que l'autre branche ou de même longueur, formant une partie d'extrémité distale (12A) de l'organe de traçage (12), ladite au moins une partie d'extrémité (12A) étant perpendiculaire à la branche et dans le même plan que celle-ci, et
une paroi arrière (114) du boîtier (14) ayant un trou traversant pratiquement rectangulaire (117) dans lequel passe une pièce (115) de support en T depuis un côté de l'ouverture traversante et passant dans l'ouverture, si bien qu'un espace est délimité entre la partie de tête de la pièce de support en T et les côtés du trou débouchant, et que cet espace est utilisé comme trou de montage (116) dans lequel est insérée la partie d'extrémité distale (12A), la partie de tête du support en T ayant une surface inclinée formée comme plaque de guidage (129) dirigée vers l'intérieur du boîtier vers une gorge courbe de montage (122) placée sur la partie de tête, si bien que la plaque de guidage (120) guide la pièce inférieure de raccordement (12B) de l'organe de traçage en U lorsqu'elle atteint la paroi arrière (114), pendant que, au cours de l'insertion de l'organe de traçage dans le boîtier, les parties d'extrémité distale ont été insérées au-delà de la paroi arrière (114) dans le trou de montage (116), si bien que la pièce inférieure de raccordement (12B), lors du contact avec la pièce de support en T (115), est guidée le long de la surface inclinée dans la gorge courbe de montage (122), la gorge courbe de montage étant destinée à retenir la pièce inférieure (12B) de raccordement afin que la pièce inférieure (12B) de raccordement soit utilisée comme axe de rotation pour l'organe de traçage lorsque ladite au moins une partie d'extrémité distale (12A) se déplace le long de la gorge de came de circulation.

2. Dispositif de verrouillage selon la revendication 1, comprenant en outre un organe de support (128) disposé dans le boîtier (14) et ayant une partie de la gorge courbe de montage (122) et la surface inclinée formée à l'intérieur pour le support d'une force de traction de l'organe de traçage (12).

3. Dispositif de verrouillage selon la revendication 1 ou 2, comprenant en outre un organe d'empêchement ou pièce à languette (124), placé dans le boîtier (14) et destiné à empêcher la sortie de la pièce inférieure (12B) de raccordement de l'organe de traçage (12) de la gorge de montage (122).

4. Dispositif de verrouillage selon l'une quelconque des revendications précédentes, dans lequel l'organe de traçage a au moins une partie d'extrémité distale (12A) destinée à parcourir dans ladite au moins une gorge de came à circulation (30, 148).

5. Dispositif de verrouillage selon l'une des revendications précédentes, dans lequel l'organe de traçage (12) est constitué par un organe analogue à une tige en forme de U pratiquement ayant deux parties d'extrémité distale (224, 226) destinées à parcourir deux gorges de came de circulation (30, 148).
